# EUROPEAN PATENT APPLICATION

(11) **EP 2 065 653 A2**
(43) Date of publication of application: **03.06.2009**
(21) Application number: 08168630.5
(22) Date of filing: 07.11.2008
(51) Int. Cl.: F24D 11/00, F24D 12/02, F24D 19/10

(54) **Device for heating a heat transfer fluid, comprising a gas-fired boiler and an accumulation tank heated in any manner**

(30) Priority: 30.11.2007 IT MN20070042
(71) Applicant: AR.CA. S.r.l., 46030 San Giorgio di Mantova (MN) (IT)
(72) Inventor: Cavallini, Michele, 46100 Mantova (IT)
(74) Representative: Modiano, Micaela Nadia

(57) **Abstract**

A device for heating a heat transfer fluid comprising a gas-fired boiler (1) and an accumulation tank (11), comprising, on a return duct (8b) from user devices (6, 7), a three-way valve (10) that is managed by an electronic control system, which comprises first and second heat transfer fluid temperature sensors (17, 18), installed on the return duct (8b) upstream of the valve (10) and on the output duct (13) from the tank (11), the three-way valve (10) being adapted to allow the access of the heat transfer fluid that arrives from the user devices (6, 7) to an exchanger (3) associated with the burner (2) of the boiler (1) directly and/or by means of a bypass line that passes through the accumulation tank (11).

## Description

The present invention relates to a device for heating a heat transfer fluid, comprising a gas-fired boiler and an accumulation tank heated in any manner.

It is known that there are, particularly in the residential field, heating devices that comprise two components.

The first component is constituted by a gas-fired boiler, which is designed to heat a heat transfer fluid, generally constituted by water, which is commonly required to serve two uses, which consist in supplying a heating system and in preparing hot water for sanitary uses.

The second component is constituted by a tank for accumulating the heat transfer fluid, which can receive heat in different forms, and thus for example can be provided with a surface-type exchanger connected to different heat sources, such as solar panels, or a boiler designed to bum biomasses, or an apparatus for recovering heat from industrial processes.

The ways of connecting the two components currently observed in the background art are not entirely satisfactory.

A first form of connection provides for alternating operation of the gas-fired boiler and of the accumulation tank, which receives heat from different sources, and substantially a parallel operation of the two components is performed in which the operation of one component excludes the operation of the other one; in this case, the heat transfer fluid contained in the accumulation tank is used only if the temperature required in input to the user devices is lower than the temperature in the tank, with consequent failure to utilize a considerable energy potential.

In a second form of connection of the two components, the accumulation tank receives heat both from the gas-fired boiler, which constitutes the first component, and from a different source, and the user devices are then served by such tank; in this case, an addition of heat to the accumulation tank might occur simultaneously between the gas-fired boiler and the different source, or even from the gas-fired boiler with priority over the different source, as occurs when such source is constituted by a solar panel system, in sunless periods, and thus ultimately the undesirable phenomenon occurs of not being able to use the different heat source because the accumulation tank has already been brought to temperature by the gas-fired boiler.

The aim of the present invention is to provide a heating device that has great efficiency thanks to an advantageous synergy in the operation of the gas-fired boiler and of the accumulation tank for the heat transfer fluid that receives heat from different sources.

This aim is achieved by a device for heating a heat transfer fluid, comprising a gas-fired boiler and an accumulation tank heated in any manner, according to the invention, characterized in that it comprises the features stated in the appended claims.

Further characteristics and advantages of the present invention will become better apparent from the description of two preferred but not exclusive embodiments thereof, illustrated by way of non-limiting example in the accompanying drawings, wherein:
Figure 1 is a diagram of the device;
Figure 2 is another diagram of the device according to a variation.

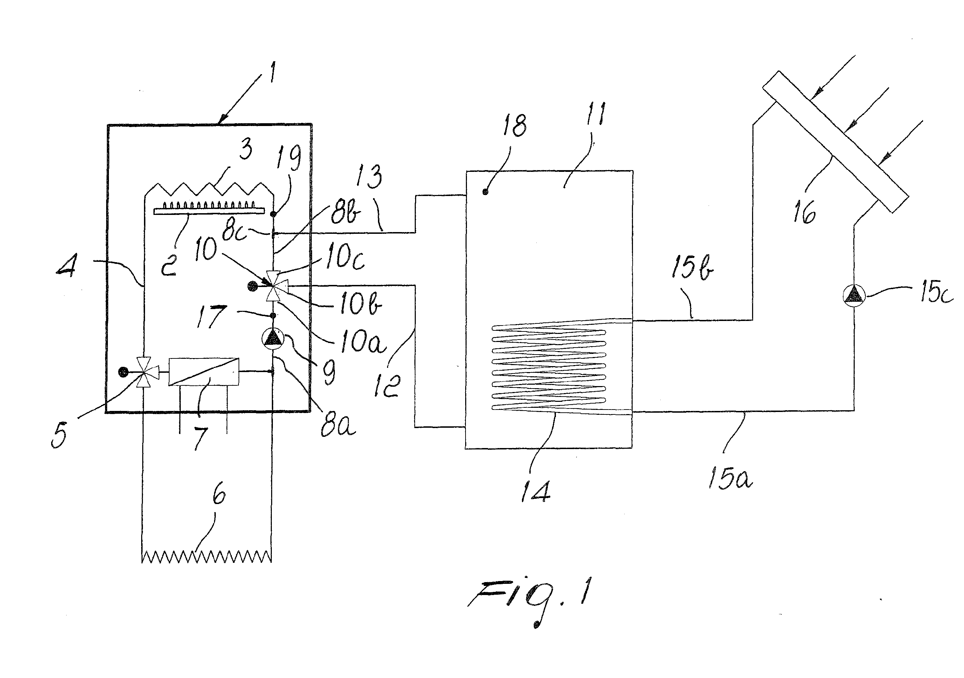

With reference to Figure 1, reference numeral 1 generally designates a gas-fired boiler that constitutes a first component of the device, which is provided with a burner 2, which transmits heat to a heat transfer fluid, generally constituted by water, by means of an appropriately provided exchanger 3 associated therewith.

The exchanger 3 is provided with a delivery duct 4, which reaches a shunt valve 5, which allows, in a known manner, the alternative supply of two different user devices, constituted by a heating system 6 and by a heat exchanger 7 of a sanitary system: the return duct of the heat transfer fluid from said user devices to the exchanger 3 is divided into a branch 8a, which comprises a circulating pump 9, and a branch 8b, by a three-way valve, designated by the reference numeral 10.

Considering the second component of the device, it can be seen that it comprises a tank 11 for accumulating the heat transfer fluid fed by means of an intake duct 12 and drawn by means of an output duct 13, and said tank 11 is provided with a heat exchanger 14 in the form of a coil that is connected by means of lines 15a, 15b, provided with a circulating pump 15c with a heat source constituted by a solar panel 16 to supply heat to the heat transfer fluid contained therein.

Different heat sources might be used in a known manner to heat the heat transfer fluid contained in the tank 11, and can be for example a biomass-fueled boiler, or a system for recovering heat from industrial processes.

The three-way valve 10 has a first always-open way 10a, which is connected to the branch 8a of the return duct from the user devices to the exchanger 3, while the two remaining ways 10b, 10c, provided with a flow control element, are connected respectively to the intake duct 12 of the accumulation tank 11 and to the branch 8b of said duct for return from the user devices; the output duct 13 of said tank 11 is inserted on said branch 8b at a coupling 8c.

The three-way valve 10 is managed by an electronic control system, which comprises a first sensor 17 and a second sensor 18 for the temperature of the heat transfer fluid, which are installed respectively at the branch 8a of the return duct from the user devices and at the output of the heat transfer fluid accumulation tank 11; there is also a third sensor 19 for the temperature of the heat transfer fluid, which is installed at the input of the exchanger 3.

The signals sent by such three sensors interact with the electronic control system of the valve 10, so as to create the operating modes that are now described.

In a working hypothesis, in which the signals of the sensor 19 are irrelevant, we consider the case in which the temperature of the heat transfer fluid detected by the sensor 17 is higher than the temperature detected by the sensor 18.

In this case, the valve 10 is arranged so that the way 10c is open and the way 10b is closed, and consequently an access of the heat transfer fluid that arrives from the user devices to the exchanger 3 associated with the burner 2 of the boiler in a direct manner is provided, with exclusion of the tank 11 from operation.

Let us now consider the case in which the temperature of the heat transfer fluid detected by the sensor 17 is lower than the temperature detected by the sensor 18.

In this case, the valve 10 is arranged so that the way 10b is open and the way 10c is closed, and the access of the heat transfer fluid from the user devices to the exchanger 3 is thus provided by means of a bypass line that passes through the accumulation tank 11, drawing fluid contained therein.

In other words, it has been sufficient for the condition to occur in which the temperature of the heat transfer fluid in the tank 11 is higher than the temperature of the fluid in the return duct from the user devices, a condition which occurs rather easily, to cause the temperature that has to be provided in the tank to be rather low, in order to be able to achieve in the device according to the invention utilization of the heat stored in the accumulation tank 11 and therefore high efficiency.

In the functional situation described above with reference to the case in which the temperature of the heat transfer fluid detected by the sensor 17 is lower than the temperature detected by the sensor 18, an intervention of signals that arrive from the sensor 19 can, for example, cause the opening not only of the way 10b of the valve 10 but also of the way 10c to obtain an appropriate mixing of the heat transfer fluid at the input of the exchanger 3, thus determining another advantageous feature of the device according to the invention.

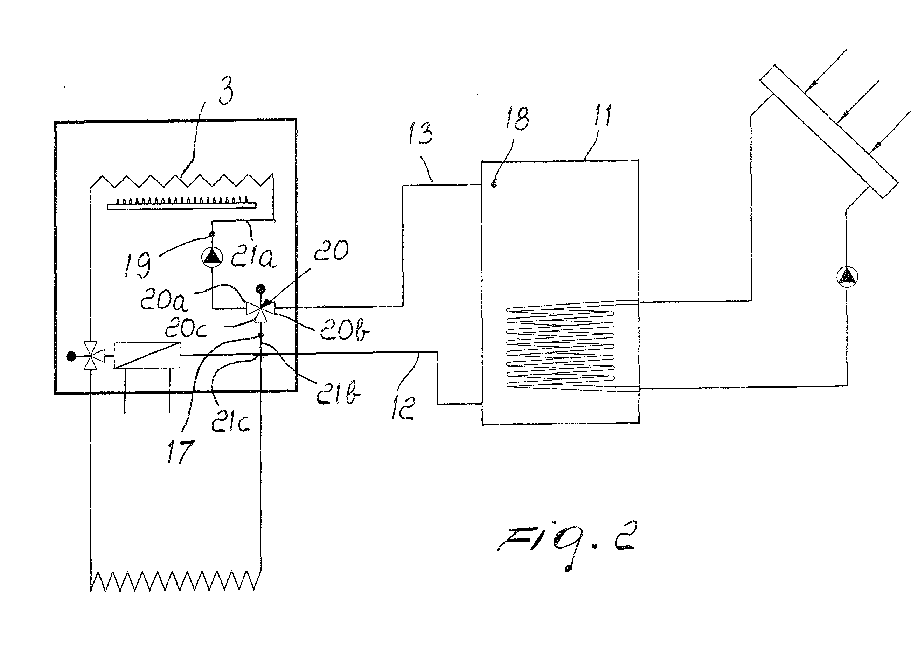

The variation shown in Figure 2 relates exclusively to the method of installation of the three-way valve on the return duct from the user devices, the remainder remaining unchanged.

In this case, in fact, the valve, designated by reference numeral 20, has a way 20a always open and connected to a branch 21a of the return duct from the user devices, which reaches the exchanger 3, while two remaining ways 20b, 20c provided with flow control element are connected respectively to the output duct 13 of the accumulation tank 11 and to a branch 21b of the return duct from the user devices; the intake duct 12 of said tank 11 engages on said branch at a coupling 21 c.

The three sensors 17, 18, 19 comprised in the electronic control system of the valve 20 are of course always present.

The described invention is susceptible of numerous other modifications and variations, all of which are within the scope of the appended claims; all the details may further be replaced with other technically equivalent elements.

The disclosures in Italian Patent Application no. MN2007A000042, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A device for heating a heat transfer fluid comprising a gas-fired boiler (1) and an accumulation tank (11), said gas-fired boiler comprising a burner (2) that is adapted to transmit heat to a heat transfer fluid by means of an exchanger (3) that is associated therewith and is provided with a delivery duct (4) to supply user devices that comprise a heating system (6) and/or a heat exchanger (7) of a sanitary system, and a duct (8a, 8b) for return from said user devices (6, 7), said tank (11) for accumulating said heat transfer fluid fed by means of an intake duct (12) and drawn by means of an output duct (13) being connected to any heat source except for the above cited gas-fueled boiler, **characterized by** the presence, on said return duct (8b) from the user devices, of a three-way valve (10) that is managed by an electronic control system, which comprises first (17) and second (18) heat transfer fluid temperature sensors, installed respectively at said return duct upstream of the three-way valve (10) and at the inlet of the output duct from said accumulation tank (11), said three-way valve (10) being adapted to allow the access of the heat transfer fluid that arrives from the user devices (6, 7) to the exchanger (3) associated with the burner (2) of the boiler (1) directly and/or by means of a bypass line that passes through the accumulation tank, in manners that are determined by the electronic control system according to the signals that arrive from said sensors (17, 18).

2. The device according to claim 1, **characterized in that** the three-way valve (10) installed on the return duct (8b) from the user devices (6, 7) has an always-open way (10a) that is connected to the branch (8a) of said return duct (8b) directly connected to said user devices (6, 7), while the two remaining ways (10b, 10c), provided with a flow control element, are connected respectively to the intake duct (12) of the heat transfer fluid accumulation tank (11) and to the branch of the duct for return from the user devices that reaches the exchanger (3) associated with the burner (2) of the boiler (1), the output duct (13) of said accumulation tank (11) being inserted on said branch.

3. The device according to claim 1, **characterized in that** the three-way valve (10) installed on the duct (8b) for return from the user devices (6, 7) has an always-open way (10a), which is connected to the branch (8a) of said return duct that reaches the exchanger (3) associated with the burner (2) of the boiler (1), while the two remaining ways (10b, 10c), provided with a flow control element, are connected respectively to the output duct of the heat transfer fluid accumulation tank (11) and to the branch of said duct for return from the user devices (6, 7) directly connected to said user devices, the intake duct (12) of said accumulation tank being inserted on said branch.

4. The device according to one or more of the preceding claims, **characterized in that** the electronic control system of the three-way valve (10) comprises a third heat transfer fluid temperature sensor (19), which is installed at the inlet of the exchanger (3) associated with the burner (2) of the boiler (1), adapted to send signals which interact with the signals sent by the first and second sensors (17, 18) in determining the operating modes of said three-way valve (10).
